# EUROPÄISCHE PATENTSCHRIFT

(11) **EP 1 118 640 B1**
(45) Veröffentlichungstag und Bekanntmachung des Hinweises auf die Patenterteilung: **23.07.2003**
(21) Anmeldenummer: 01107749.2
(22) Anmeldetag: 25.08.1997
(51) Int. Cl.: C09B 57/12, C09B 25/00, C08K 5/34, C07D 307/89, C07C 63/331

(54) **Verbrückte Perinone, Chinophthalone und Perinon-Chinophthalone**
Bridged perinone, quinophthalone and perinone-quinophthalone
Périnone, quinophtalone et périnone-quinophtalone pontées

(30) Priorität: 05.09.1996 DE 19636032; 05.09.1996 DE 19636033; 21.02.1997 DE 19706900
(43) Veröffentlichungstag der Anmeldung: 25.07.2001
(62) Teilanmeldung aus: 97114706.1
(73) Patentinhaber: BAYER AG, 51368 Leverkusen (DE)
(72) Erfinder: Kalz, Dietmar, Dr., Exeter, CA 93221 (US); Arlt, Dieter, Prof. Dr., 32657 Lemgo (DE); Reinhardt, Karl-Heinz, 40789 Monheim (DE)

(56) Entgegenhaltungen:
- EP-A- 0 438 382
- BE-A- 678 479
- CH-A- 463 667
- FR-A- 1 564 232
- FR-A- 2 116 431
- MANUKIAN B.K.: "chinophthalone", CHIMIA, , 1970, Band 24, Nr. 9, Seiten 328 - 339

## Beschreibung

Die Erfindung betrifft verbrückte Perinone und Perinon-Chinophthalone, Verfahren zu ihrer Herstellung sowie ihre Verwendung zum Massefärben von Kunststoffen.

Es ist bekannt, Perinonfarbstoffe, wie sie beispielsweise aus FR-A-1 075 110 oder US-A-5.466.805 bekannt sind, zum Massefärben von Kunststoffen zu verwenden.

Es ist außerdem bekannt, Chinophthalonfarbstoffe, wie sie beispielsweise in DE-A-44 35 714 oder DE-A-21 32 681 beschrieben sind, zum Massefärben von Kunststoffen einzusetzen.

Derartige Verbindungen zeichnen sich zwar durch eine gute Temperaturstabilität und hohe Lichtechtheit aus, dafür ist allerdings ihre Sublimierechtheit noch verbesserungswürdig. Beim Färbeverfahren, d.h. in den Spritzgussmaschinen, kommt es bei Temperaturen von über 240°C nicht selten zu einer unerwünschten Sublimation des Farbstoffes, wodurch das Arbeitsgerät verschmutzt wird, was aufwendige Reinigungsmaßnahmen erforderlich macht.

Aufgabe der vorliegenden Erfindung war es daher, Perinon- bzw. Chinophthalonfarbstoffe mit verbesserter Sublimierechtheit bereitzustellen.

Es wurden Verbindungen der allgemeinen Formel (I) oder deren tautomeren Formen gefunden 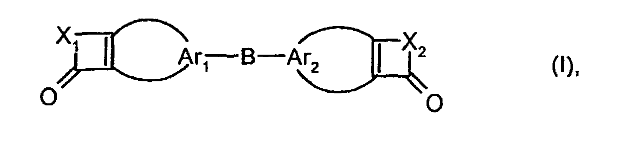 worin
- Ar₁ und Ar₂: unabhängig voneinander Reste zur Vervollständigung gegebenenfalls durch C₁-C₆-Alkyl, insbesondere Methyl, Ethyl, n-Propyl, iso-Propyl, n-, sek- und tert.-Butyl, Halogen, insbesondere Cl und Br, Alkyl- und Arylcarbonyl, Alkyl- und Arylsulfonyl, Nitro, Aryl, insbesondere gegebenenfalls substituiertes Phenyl, Aryloxysulfonyl, insbesondere -SO₂OC₆H₅, Hydroxy, C₁-C₆-Alkoxy, wie Methoxy oder Benzyloxy, Aryloxy, wie Phenoxy gegebenenfalls durch Alkyl oder Acyl substituiertes Amino wie NH₂, NHCOCH₃ und -N(C₂H₅)₂, gegebenenfalls durch Alkyl oder Aryl substituiertes Aminosulfonyl wie SO₂N(CH₃)₂ und SO₂NHCH₃ oder einen ankondensierten cycloaliphatischen oder heterocyclischen Ring substituierter carbocyclischer Aromaten bedeuten,
- B: einen Rest der Formel -O-
bedeutet, dessen Enden jeweils an ein aromatisches C-Atom der beiden Reste Ar₁ und Ar₂ gebunden sind,
und
- X₁ und X₂: unabhängig voneinander für einen Rest der Formeln ausgewählt aus der Gruppe 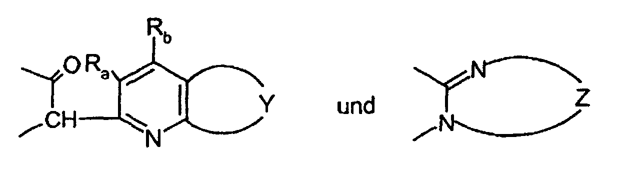 stehen, mit der Maßgabe, dass
- X₁ und X₂: nicht gemeinsam die Bedeutung des Restes der Formel 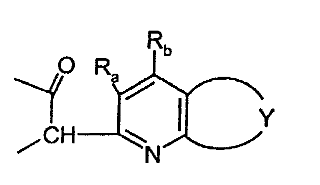
besitzen,
wobei sie jeweils so im Ring angeordnet sind, dass die 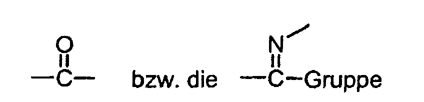 benachbart zur C-C-Doppelbindung steht,
worin
- Y: den Rest eines gegebenenfalls substituierten Benzol- oder Naphthalinringes bildet,
- Z: gegebenenfalls substituiertes ortho-Phenylen, ortho-Naphthylen, peri-(1,8)-Naphthylen oder Arylen aus mehr als zwei miteinander kondensierten Benzolringen bedeutet, wobei die Arylreste, die mehr als zwei miteinander kondensierte Benzolringe aufweisen, in ortho- oder entsprechend einer peri-Stellung im Naphthalin verbrückt sind,
- Rₐ: H oder OH bedeuten und
- R_{b}: H oder Halogen, insbesondere F, Br und Cl bedeutet.

Die peri-Stellung entspricht eigentlich der 1,8-Stellung im Naphthalin. Diese Bedeutung wird allerdings sowohl in der Literatur als auch im Sinne der vorliegenden Anmeldung auch auf Arylene ausgeweitet, die mehr als zwei miteinander kondensierte Benzolringe aufweisen.

Als mögliche Substituenten von Z seien beispielsweise genannt:
C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder ein ankondensierter cycloaliphatischer oder heterocyclischer Ring.

Bevorzugte Substituenten sind:
Chlor, Brom, Nitro, Methoxy, NH₂, Benzyloxy, Hydroxy, -SO₂O(C₆H₅), -SO₂N(CH₃)₂, -SO₂NHCH₃, Methyl, Ethyl, n-Propyl, iso-Propyl, n-, sek-, tert.-Butyl, NHCOCH₃, -N(C₂H₅)₂ oder gegebenenfalls substituiertes Phenyl.

Als mögliche Substituenten des durch Y vervollständigten Benzol- bzw. Naphthalinrestes seien beispielsweise genannt: Halogen, insbesondere Cl und Br, -COOH, -COOR, wobei R für C₁-C₁₀-, vorzugsweise C₁-C₄-Alkyl, insbesondere Methyl und Ethyl, C₆-C₁₀-Aryl oder C₅-C₈-Cycloalkyl steht und C₁-C₆-Alkyl, insbesondere Methyl.

Besonders bevorzugt bedeuten Ar₁ und Ar₂ unabhängig voneinander einen Rest zur Vervollständigung eines gegebenenfalls substituierten Benzol- oder Naphthalinringes, insbesondere eines gegebenenfalls substituierten Benzolringes.

Der Rest der Formel -O- in der Bedeutung von B ist mit seinen Enden jeweils an den jeweiligen Aromaten Ar₁ bzw. Ar₂ vorzugsweise in para-Stellung zu einer Carbonylgruppe gebunden.

Die erfindungsgemäßen Verbindungen der Formel (I) zeichnen sich durch eine hervorragende Sublimierechtheit beim Massefärben von Kunststoffen aus. Zudem besitzen sie eine sehr gute Lichtechtheit, gute Thermostabilität und eine besonders hohe Farbstärke. Ein Vergleich in der Farbstärke gegenüber den nicht verdoppelten Chinophthalonen zeigt eine mehr als additive Zunahme, was einen synergistischen Effekt erkennen lässt.

Ebenfalls bevorzugt sind Verbindungen der Formel (I), die der Formel (III) oder deren tautomeren Formen entsprechen 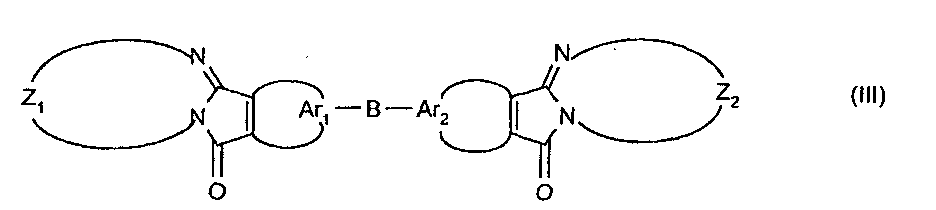 worin
- Z₁ und Z₂: unabhängig voneinander gegebenenfalls substituiertes ortho-Phenylen, ortho-Naphthylen, peri-(1,8)-Naphthylen oder Arylen aus mehr als zwei miteinander kondensierten Benzolringen bedeuten, wobei die Arylreste, die mehr als zwei miteinander kondensierte Benzolringe aufweisen, in ortho- oder entsprechend einer peri-Stellung im Naphthalin verbrückt sind,
und
- Ar₁, Ar₂ und B: die oben angegebenen Bedeutungen besitzen.

Als mögliche Substituenten für die Reste Z₁ und Z₂ sind beispielsweise die für den Rest Z angegebenen zu nennen.

Besonders bevorzugte Reste Z₁ und Z₂ entsprechen unabhängig voneinander einem gegebenenfalls substituierten peri-(1,8)-Naphthylen.

Besonders bevorzugt sind Verbindungen der Formel (III), die der Formel (IIIa) entsprechen 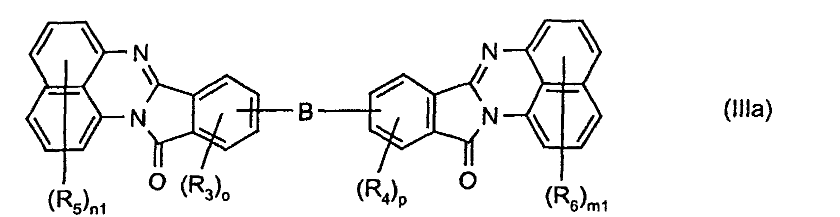 worin
- n₁ und m₁: unabhängig voneinander für eine Zahl von 0 bis 4 stehen,
- R₅ und R₆: unabhängig voneinander jeweils gleich oder verschieden sind und die Bedeutung der für die Reste Z₁ und Z₂ genannten Substituenten annehmen können, insbesondere für Halogen und C₁-C₆-Alkyl, stehen,
- o und p: unabhängig voneinander eine Zahl von 0 bis 2, insbesondere 0 oder 1, bedeuten,
- R₃ und R₄: unabhängig voneinander jeweils gleich oder verschieden sind und die Bedeutung der für die Reste Z₁ und Z₂ genannten Substituenten annehmen können, insbesondere Halogen, NO₂, -NH-Acyl oder -NH-Alkyl bedeuten und
- B: die obengenannte Bedeutung hat.

Ganz besonders bevorzugt sind Verbindungen der Formel (III),
worin
Z₁ = Z₂ und
Ar₁ = Ar₂ bedeuten.

Entsprechend vorteilhaft sind Verbindungen der Formel (IIIa),
worin
n₁ = m₁,
R₅ = R₆,
o = p und
R₃ = R₄ bedeuten,
wobei insbesondere
n₁, m₁, o und p für 0 stehen.

Besonders bevorzugt sind Verbindungen der Formel (III), die der Formel (IIIb) entsprechen 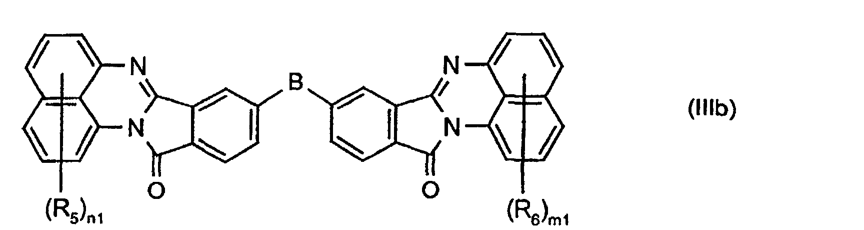 worin
n₁, m₁, R₅, R₆ und B die oben angegebenen Bedeutungen haben.

Die erfindungsgemäßen Verbindungen der Formel (III) zeichnen sich ebenfalls durch eine hervorragende Sublimierechtheit beim Massefärben von Kunststoffen aus. Zudem besitzen sie eine sehr gute Lichtechtheit, gute Thermostabilität und eine besonders hohe Farbstärke. Ein Vergleich in der Farbstärke gegenüber dem nicht verdoppelten Perinon zeigt beispielsweise eine mehr als additive Zunahme, was einen synergistischen Effekt erkennen lässt.

Ein besonderer Vorteil bei den symmetrischen Perinonen der Formel (III), also worin Z₁ = Z₂ und Ar₁ = Ar₂ bedeutet, gegenüber den nicht über das Brückenglied B verdoppelten Perinonen liegt darin, dass bei fast identischem Farbton von verdoppeltem zum unverdoppelten System die Farbstärke bei Einsatz der gleichen Menge bei den erfindungsgemäßen Perinonen in der Regel deutlich höher ist.

Besitzen die erfindungsgemäßen Perinone der Formel (III) unterschiedliche Bedeutungen für Z₁ und Z₂ und/oder fiir Ar₁ und Ar₂, so kann es vorteilhaft sein, die gegebenenfalls herstellungsbedingt entstehenden Mischungen von symmetrischen und unsymmetrischen Perinonen der Formel (III) dem Verwendungszweck zuzuführen.

Ebenfalls bevorzugt sind Verbindungen der Formel (I), die der Formel (IV) oder deren tauromeren Formen entsprechen 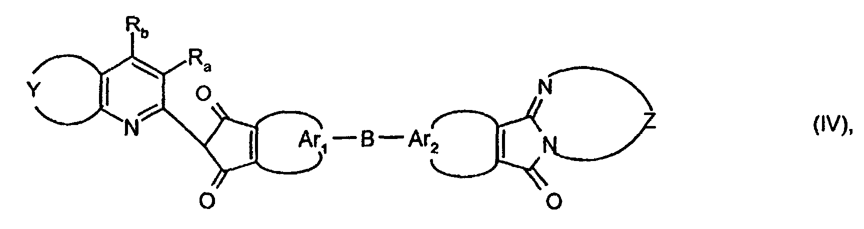 worin
Y, Z, Rₐ, Rb, Ar₁, Ar₂ und B die oben angegebene Bedeutung besitzen.

Besonders bevorzugt sind Verbindungen der Formel (IV), die der Formel (IVa) oder deren tautomeren Formen entsprechen 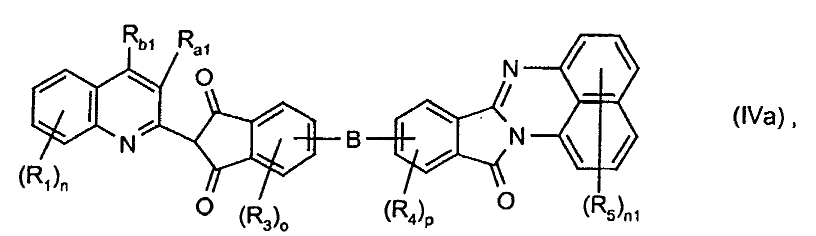 worin
R₁, R₃, R₄, R₅, R_{b1}, Rₐ₁, B, n, p und n₁ die oben angegebene Bedeutungen besitzen.

Ganz besonders bevorzugt sind Verbindungen der Formel (IV), die der Formel (IVb) oder deren tautomeren Formen entsprechen 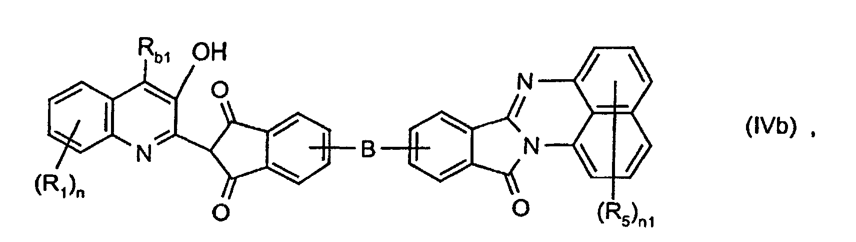 worin
R₁, R₅, R_{b1}, B, n und n₁ die oben angegebene Bedeutung besitzen.

Die erfindungsgemäßen Verbindungen der Formel (IV) zeichnen sich ebenfalls durch eine hervorragende Sublimierechtheit beim Massefärben von Kunststoffen aus. Zudem besitzen sie eine sehr gute Lichtechtheit, gute Thermostabilität und eine besonders hohe Farbstärke.

Die Thermostabilität ist bei 300°C und deutlich darüber sehr gut.

Besonders bevorzugt sind herstellungsbedingte Mischungen enthaltend Verbindungen der Formel (IV) sowie solche der Formel (III). Dabei sind insbesondere solche Mischungen von Vorteil, welche neben der Verbindung der Formel IV) 0 bis 25 Gew.-% einer Verbindung der Formel (II) und 0 bis 25 Gew.-% einer Verbindung der Formel (III) enthält, wobei die Summe aus den Verbindungen (IV) und (III) 100 % beträgt.

Die Erfindung betrifft weiterhin ein Verfahren zur Herstellung der erfindungsgemäßen Verbindungen der Formel (I), das dadurch gekennzeichnet ist, dass man Tetracarbonsäuren oder deren Anhydride der Formel (V) 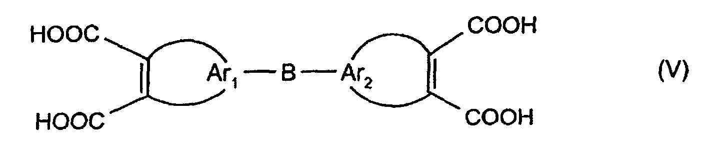 worin
Ar₁, Ar₂ und B die obengenannte Bedeutung besitzen,
mit einer oder mehreren Verbindungen der Formeln (VI) und/oder (VII) 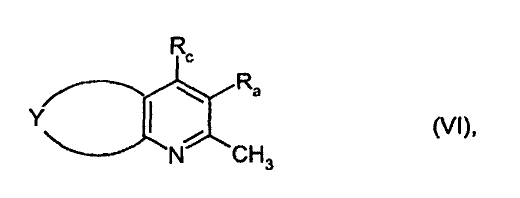 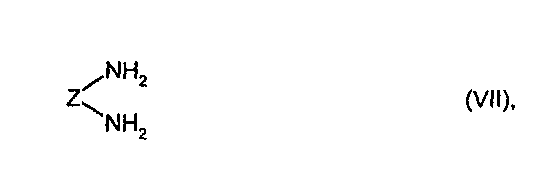 worin
- R_{c}: H, COOH oder Halogen, insbesondere F, Br und Cl bedeutet, insbesondere für H oder COOH steht und
- Y, Z und Rₐ: die oben angegebene Bedeutung besitzen,
kondensiert, wobei die Summe der Verbindungen der Formeln (VI) und (VII) zwei Mol-Äquivalenten, bezogen auf die Tetracarbonsäure (V) entspricht.

Die Angabe der Mol-Äquivalente der zur Herstellung der Verbindung (I) eingesetzten Reaktanden dient lediglich zur Angabe der Stöchiometrie und schließt nicht größere oder kleinere Mengen aus, die gegebenenfalls technisch sinnvoller sind.

Die eingesetzten Verbindungen der Formeln (VI) bzw. (VII) können in ihrer Summe selbstverständlich auch mehr als 2 Mol-Äquivalente, bezogen auf die Tetracarbonsäure (V) bzw. deren Anhydride, betragen. Bevorzugt ist es jedoch, stöchiometrisch zu arbeiten.

Die Kondensation kann dabei direkt durch Zusammenschmelzen äquimolarer Mengen der Komponenten der Formeln (V) und (VI) bzw. (VII) bei einer Temperatur von 120°C bis 250°C erfolgen, oder vorteilhafter durch Umsetzung in einem Lösungsmittel bei einer Temperatur von 110°C bis 220°C, gegebenenfalls unter Druck, durchgeführt werden, wobei eine destillative Entfernung des Reaktionswassers erfolgen kann.

Geeignete Lösungsmittel sind beispielsweise: Chlorbenzol, o-Dichlorbenzol, Trichlorbenzol, Xylol, Dimethylformamid, N-Methylpyrrolidon, Eisessig, Propionsäure, Phenol, Kresole, Phenoxyethanol, Glykole und deren Mono- und Dialkylether, Alkohole, z.B. Methanol, Ethanol, i-Propanol, Wasser und wässrige Lösungsmittel wie z.B. verdünnte Schwefelsäure u.a.

Gegebenenfalls kann die Reaktion unter Zusatz eines sauren Katalysators erfolgen.

Geeignete Katalysatoren sind beispielsweise: Zinkchlorid, p-Toluolsulfonsäure, Salzsäure, Schwefelsäure, organische Säuren u.a.

Besonders bevorzugt wird die Tetracarbonsäure der Formel (V) in Form ihres Anhydrids eingesetzt.

Bevorzugt werden in das erfindungsgemäße Verfahren Verbindungen der Formel (V) eingesetzt, die der Formel (Va) oder deren Anhydriden entsprechen 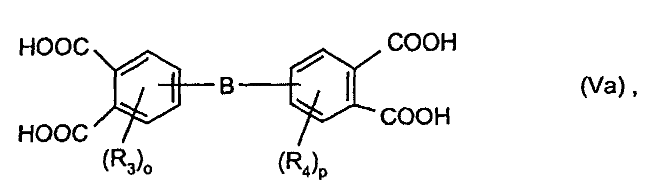 worin
R₃, R₄, B, o und p die obengenannten Bedeutungen besitzen.

Ganz besonders bevorzugt werden Verbindungen der Formel (V) eingesetzt, die der Formel (Vb) oder deren Anhydride entsprechen 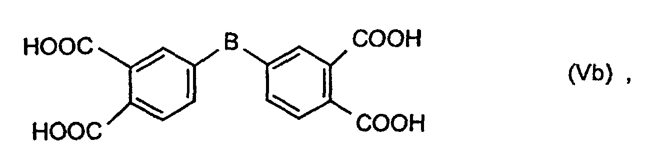 wobei
- B: für -O- steht.

Verbindungen der Formel (V) sind teilweise aus JP-A-60 166 325, DE-A 2 337 631 sowie Chem. Heterocycl. Comp. 30, 1994, S. 31-34 sowie US-A 3 332 964 bekannt.

Bevorzugte Verbindungen der Formel (VI) sind Chinaldine der Formel (VIa) 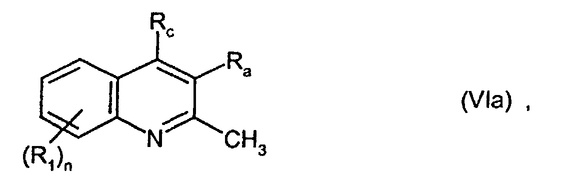 worin
R₁, R_{c}, Ra und n die oben angegebene Bedeutung haben.

Geeignete Chinaldine der Formel (VIa) sind beispielsweise solche der nachfolgend genannten Formeln:

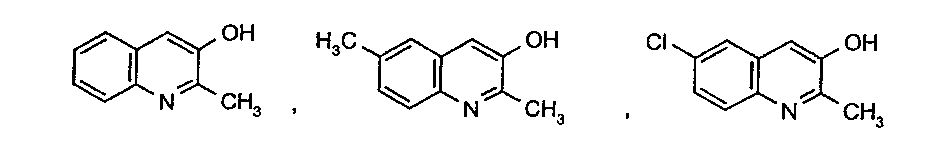

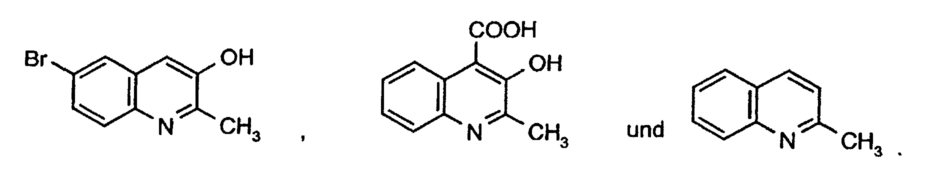

Die Diamine der Formel (VII) sind bekannt oder lassen sich beispielsweise analog bekannten Diaminen herstellen.

Als aromatische Diamine der Formel (VII) sind bevorzugt:
o-Phenylendiamin, Chlor-o-phenylendiamine, Dichlor-o-phenylendiamine, Methylo-phenylendiamine, Ethyl-o-phenylendiamine, Methoxy-o-phenylendiamine, Acetamino-o-phenylendiamine, Phenyl-o-phenylendiamine, Naphthylen-o-diamine, ferner 1,8-Naphthylendiamin, Chlor-1,8-naphthylendiamine, Dichlor-1,8-naphthylendiamine, Methyl-1,8-naphthylendiamine, Dimethyl-1,8-naphthylendiamine, Methoxy-1,8-naphthylendiamine, Ethoxy-1,8-naphthylendiamine, Acetamino-1,8-naphthylendiamine und 1,8-Diaminoacetnaphthylen.

In einer weiteren bevorzugten Verfahrensvariante wird ein gegebenenfalls substituiertes peri-Naphthylendiamin als Verbindung der Formel (VII) eingesetzt, insbesondere 1,8-Naphthylendiamin.

Die Kondensation kann dabei direkt durch Zusammenschmelzen äquimolarer Mengen der Komponenten der Formeln (V) und (VIb) bzw. (VIc) bei einer Temperatur von 160°C bis 250°C, vorzugsweise 180 bis 220°C, besonders bevorzugt 190 bis 200°C erfolgen, oder vorteilhafter durch Umsetzung in einem Lösungsmittel bei einer Temperatur von 110°C bis 220°C, vorzugsweise 160 bis 180°C, gegebenenfalls unter Druck durchgeführt werden, wobei eine destillative Entfernung des Reaktionswassers erfolgen kann.

Bevorzugte Verbindungen der Formel (VIb) bzw. (VIc) sind Chinaldine der Formel (VIbb) 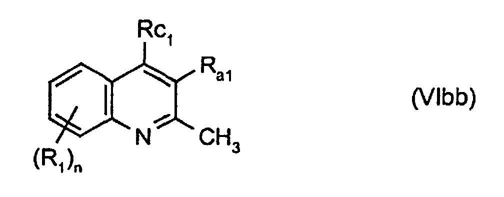 bzw. der Formel (VIcc) 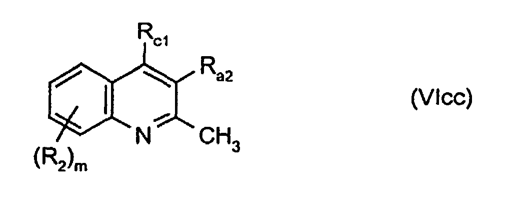 worin
R₁, R₂, R_{c1}, R_{c2}, Rₐ₁, Rₐ₂, n und m die oben angegebene Bedeutung haben.

Das erfindungsgemäße Verfahren eignet sich ebenfalls bevorzugt zur Herstellung der Verbindungen der Formel (I), die der Formel (III) entsprechen, das dadurch gekennzeichnet ist, dass man Tetracarbonsäuren oder deren Anhydride der Formel (V) mit Verbindungen der Formeln (VIIa) und/oder (VIIb) kondensiert 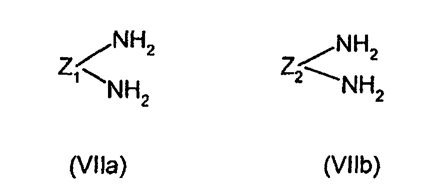 wobei die Summe der eingesetzten Diamine (VIIa) und (VIIb) zwei Mol-Äquivalente, bezogen auf die Tetracarbonsäure (V) entspricht und Z₁ und Z₂ die obengenannte Bedeutung besitzen.

Die Kondensation zur Herstellung von Verbindungen der Formel (III) kann dabei direkt durch Zusammenschmelzen äquimolarer Mengen der Komponenten der Formeln (V) und (VIIa) bzw. (VIIb) bei einer Temperatur von 120°C bis 250°C, vorzugsweise bei 120 bis 180°C, erfolgen, oder vorteilhafter durch Umsetzung in einem Lösungsmittel bei einer Temperatur von 120°C bis 220°C, vorzugsweise bei 120 bis 180°C, gegebenenfalls unter Druck, durchgeführt werden, wobei eine destillative Entfernung des Reaktionswassers erfolgen kann.

Verbindungen der Formel (III), die gegebenenfalls als Substituenten aus der Gruppe der Alkyl-, Arylaminosulfonylreste tragen, lassen sich beispielsweise aus den entsprechenden Verbindungen der Formel (III), in denen ein Substituent einen Chlorsulfonylrest bedeutet, mit Alkyl- bzw. Arylaminen darstellen.

Erfindungsgemäße Verbindungen der Formel (III), in denen ein Substituent ein Aryloxysulfonylrest ist, können auch durch Umsetzung der entsprechenden Chlorsulfonyl-Farbstoffe mit Phenolen oder Naphtholen in Gegenwart einer Base, z.B. Pyridin, Triethylamin, Alkali- bzw. Erdalkalicarbonaten, -hydroxiden oder -oxiden gewonnen werden.

Verbindungen der Formel (III), in denen Substituenten für Alkyloxy oder Acyloxy stehen, können zusätzlich durch Alkylierung bzw. Acylierung der erfindungsgemäßen Verbindungen, die eine Hydroxygruppe tragen, dargestellt werden.

Jene Verbindungen der Formel (III) mit einer gegebenenfalls acylierten bzw. alkylierten Aminogruppe können außerdem durch Reduktion mit üblichen Reduktionsmitteln, z.B. Eisen, Zink, Natriumsulfid, Wasserstoff u.a. der entsprechenden Verbindungen, in denen der entsprechende Substituent für eine Nitrogruppe steht, und gegebenenfalls nachfolgende Acylierung bzw. Alkylierung gewonnen werden. Der Acylierungsschritt kann auch im Zuge der Reduktion durch Zusatz eines Acylierungsmittels erfolgen.

Die Aufarbeitung des Reaktionsansatzes bei der Herstellung von Verbindungen der Formel (III) erfolgt vorzugsweise durch Verdünnen mit Alkoholen wie Methanol, Ethanol, Propanol oder Butanol. Auch aromatische Verdünnungsmittel wie Chlorbenzol oder Toluol können verwendet werden. Das erfindungsgemäße Verfahren liefert die erfindungsgemäßen Verbindungen, vorzugsweise in Ausbeuten von 90 bis 95 % der Theorie.

Das erfindungsgemäße Verfahren ist ebenfalls bevorzugt zur Herstellung von Verbindungen der Formel (I), die der Formel (IV) entsprechen, das dadurch gekennzeichnet ist, dass man Tetracarbonsäuren oder deren Anhydride der Formel (V) mit Verbindungen der Formel (VI) und Diaminen der Formel (VII) kondensiert, wobei die Substituenten der genannten Verbindungen die oben angegebenen Bedeutungen haben und die Summe der Verbindungen der Formeln (VI) und (VII) zwei Mol-Äquivalente, bezogen auf die Tetracarbonsäure (V), beträgt. Als bevorzugte Verbindungen der Formeln (V) bis (VII) kommen die oben angegebenen in Frage.

Das Verhältnis der Verbindungen (VI) und (VII) zueinander kann in weiten Bereichen variieren. Es beträgt beispielsweise (VI) zu (VII) = 10:90 bis 90:10. Bevorzugt ist das Verhältnis etwa 1:1.

Die Kondensation kann dabei direkt durch Zusammenschmelzen äquimolarer Mengen der Komponenten der Formeln (V) und (VI) und (VII) bei einer Temperatur von 160°C bis 250°C, vorzugsweise 180 bis 220°C, besonders bevorzugt 190 bis 200°C erfolgen, oder vorteilhafter in einem Lösungsmittel bei einer Temperatur von 110°C bis 220°C, vorzugsweise 160 bis 180°C, gegebenenfalls unter Druck durchgeführt werden, wobei eine destillative Entfernung des Reaktionswassers erfolgen kann.

Die Erfindung betrifft weiterhin Verbindungen der Formel (V) oder deren Anhydride, worin Ar₁ und Ar₂ die obengenannte Bedeutung haben und
- B: einen Rest der Formel -O- bedeutet.

Bevorzugte erfindungsgemäße Verbindungen der Formel (V) entsprechen den bereits oben angegebenen Vorzugsformen, d.h. der Formel (Va) bzw. (Vb) mit den entsprechenden Substituentenbedeutungen, wobei B den für die erfindungsgemäßen Verbindungen der Formel (V) angegebenen Bedeutungsumfang besitzt.

Die Verbindungen der Formel (V), können beispielsweise dadurch hergestellt werden, dass man Dichloride der Formel (VIII)

Cl-B-Cl (VIII)

mit Dimethylverbindungen der Formel (IXa) und/oder (IXb) 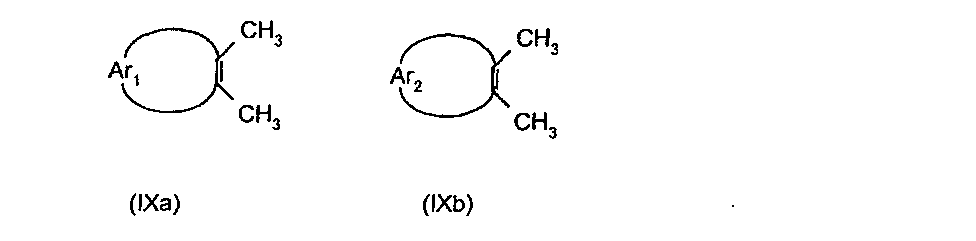 unter Friedel-Crafts-Bedingungen umsetzt, wobei die Menge der eingesetzten Verbindungen (IXa) und (IXb) zusammen mindestens 2 Mol-Äquivalente pro Mol der Verbindung (VIII) ausmacht, und das erhaltene Reaktionsprodukt anschließend oxidiert wird und Ar₁, Ar₂, und B die oben angegebene breiteste Bedeutung haben.

Eine bevorzugte Verbindung der Formel (IXa) bzw. (IXb) ist o-Xylol. Als Oxidationsmittel ist bevorzugt Salpetersäure zu nennen.

Die erfindungsgemäßen Verbindungen der Formel (I) eignen sich hervorragend zum Färben von Kunststoffen in der Masse.

Unter Massefärben werden hierbei insbesondere Verfahren verstanden, bei denen der Farbstoff in die geschmolzene Kunststoffinasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester und Polyamide, sowie Polyolefine, insbesondere Polyethylen und Polypropylen.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignete Polyester sind: Polyethylenterephthalate, Polycarbonate und Celluloseester.

Bevorzugt sind Polystyrol, Styrol-Mischpolymere, Polycarbonate und Polymethacrylat. Besonders bevorzugt ist Polystyrol, Polyethylen und Polypropylen.

Die erwähnten hochmolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Verbindungen (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguss-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Verbindungen der Formel (III) sind rot und die der Formel (IV) orange.

Die Erfindung wird erläutert, jedoch nicht beschränkt auf die folgenden Beispiele, in denen die Teile gewichtsmäßig angegeben sind. Prozentangaben Gewichtsprozente (Gew.-%) bedeuten.

### Beispiele

### Beispiel 1

100 ml Phenol wurden bei 60°C mit 5,1 g Hydroxychinaldincarbonsäure (0,025 mol), 4,0 g 1,8-Naphthalindiamin (0,025 mol) und 7,8 g des Ethers aus 3-Hydroxyphthalsäureanhydrid (0,025mol) der Formel 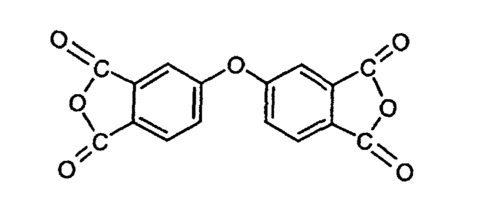 versetzt und auf 175°C erwärmt. Diese Temperatur wurde 13Std. aufrecht erhalten, dabei destillierte das Reaktionswasser ab. Dann wurde bei 60°C 400ml Methanol zugegeben und der kristalline Farbstoffniederschlag abfiltriert, erst mit Methanol dann mit Wasser gewaschen und danach getrocknet.
Ausbeute: 12,5g

Der orange Farbstoff besitzt die Formel

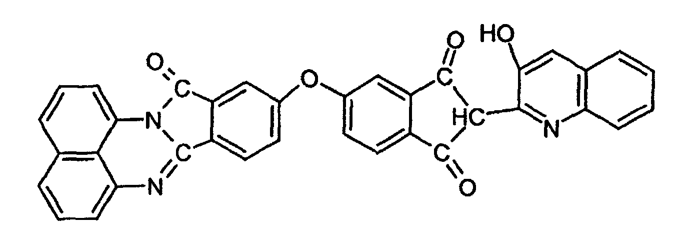

Gemäß thermogravimetrischer Analyse ergibt sich selbst bei 400°C eine ausgezeichnete Sublimierechtheit.

### Beispiel 3

150 ml Phenol wurden unter Rühren bei 60°C unter Überleiten von Stickstoff mit 16g 1,8-Naphthalindiamin (0,1mol) und 15,6 des Ethers aus 3-Hydroxyphthalsäureanhydrid (0,05mol) mit der Formel wie in Beispiel 1 angegeben versetzt und auf 175°C erwärmt. Diese Temperatur wurde 15 Std. aufrechterhalten, wobei Reaktionswasser abdestillierte. Dann wurde mit 400 ml Methanol verdünnt, der kristalline rote Farbstoff abfiltriert, erst mit Methanol, dann mit Wasser gewaschen und getrocknet.
Ausbeute: 25,6g = 92% d.Th.

Der Farbstoff besitzt die Formel

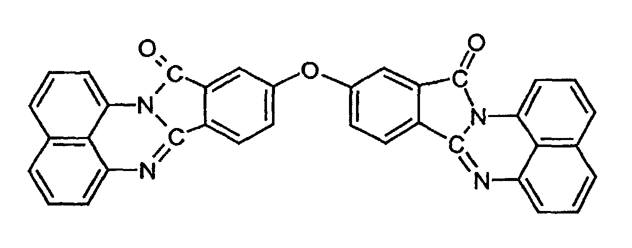

Er zeigte selbst bei 400°C eine ausgezeichnete Sublimierechtheit.

## Patentansprüche

1. Verbindungen der allgemeinen Formel (I) oder deren tautomeren Formen 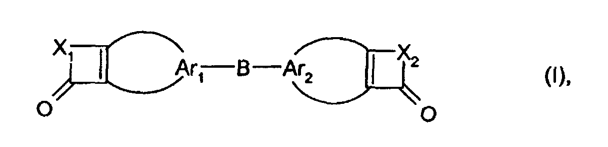 worin
Ar₁ und Ar₂ unabhängig voneinander Reste zur Vervollständigung unsubstituierter oder durch C₁-C₆-Alkyl, Halogen, Alkylcarbonyl, Arylcarbonyl, Alkylsulfonyl, Arylsulfonyl, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder ein ankondensierter Cycloaliphatischer oder heterocyclischer Ring substituierter carbocyclischer Aromaten bedeuten,
B einen Rest der Formel -O-
bedeutet, dessen Enden jeweils an ein aromatisches C-Atom der beiden Reste Ar₁ und Ar₂ gebunden sind,
und
X₁ und X₂ unabhängig voneinander für einen Rest der Formeln ausgewählt aus der Gruppe 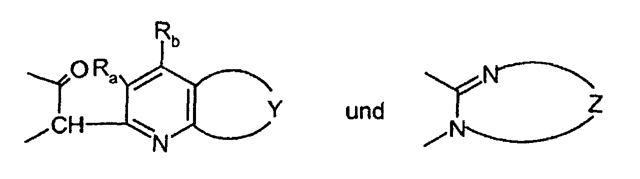 stehen, mit der Maßgabe, dass
X₁ und X₂ nicht gemeinsam die Bedeutung des Restes der Formel 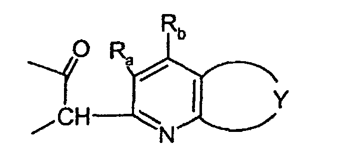
besitzen,
wobei sie jeweils so im Ring angeordnet sind, dass die
wobei sie jeweils so im Ring angeordnet sind, dass die 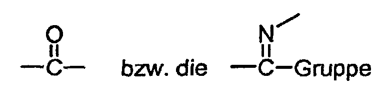 benachbart zur C-C-Doppelbindung steht,
worin
Y den Rest eines gegebenenfalls substituierten Benzol- oder Naphthalinringes bildet, wobei als mögliche Substituenten Halogen, -COOH, -COOR, wobei R für C₁-C₁₀-Alkyl, C₆-C₁₀-Aryl oder C₅-C₈-Cycloalkyl steht und C₁-C₆-Alkyl, in Frage kommen,
Z gegebenenfalls substituiertes ortho-Phenylen, ortho-Naphthylen, peri-(1,8)-Naphthylen oder Arylen aus mehr als zwei miteinander kondensierten Benzolringen bedeutet, wobei die Arylreste, die mehr als zwei miteinander kondensierte Benzolringe aufweisen, in ortho- oder entsprechend einer peri-Stellung im Naphthalin verbrückt sind, wobei als mögliche Substituenten C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder ein ankondensierter cycloaliphatischer oder heterocyclischer Ring in Frage kommen,
Rₐ H oder OH bedeuten und
R_{b} H oder Halogen, insbesondere F, Br und Cl bedeutet.

2. Verbindungen gemäß Anspruch 1, **dadurch gekennzeichnet, dass** Ar₁ und Ar₂ unabhängig voneinander einen Rest zur Vervollständigung eines gegebenenfalls substituierten Benzol- oder Naphthalinringes, insbesondere eines gegebenenfalls substituierten Benzolringes bedeuten.

3. Verbindungen gemäß Anspruch 1, die der Formel (III) oder deren tautomeren Formen entsprechen 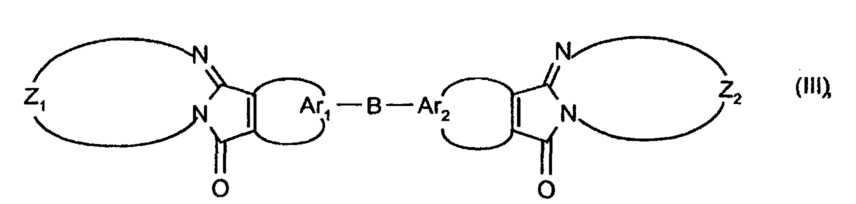 worin
Z₁ und Z₂ unabhängig voneinander gegebenenfalls substituiertes orthoPhenylen, ortho-Naphthylen, peri-(1,8)-Naphthylen oder Arylen aus mehr als zwei miteinander kondensierten Benzolringen bedeuten, wobei die Arylreste, die mehr als zwei miteinander kondensierte Benzolringe aufweisen, in ortho- oder entsprechend einer peri-Stellung im Naphthalin verbrückt sind.

4. Verbindungen gemäß Anspruch 3, worin die Reste Z₁ und Z₂ unabhängig voneinander einem gegebenenfalls substituierten peri-(1,8)-Naphthylen entsprechen.

5. Verbindungen gemäß Anspruch 1, die der Formel (IIIa) entsprechen 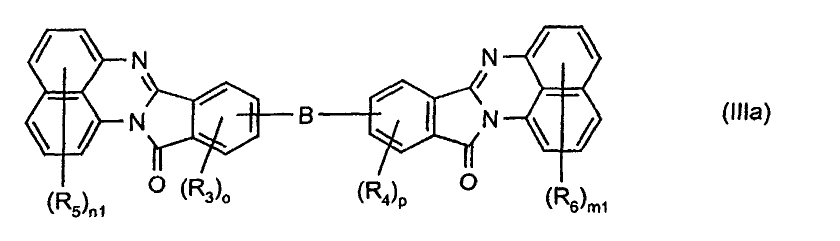 worin
n₁ und m₁ unabhängig voneinander für eine Zahl von 0 bis 4 stehen,
R₅ und R₆ unabhängig voneinander jeweils gleich oder verschieden sind und C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder einen ankondensierten cycloaliphatischen oder heterocyclischen Ring bedeuten, insbesondere für Halogen und C₁-C₆-Alkyl, stehen,
o und p unabhängig voneinander eine Zahl von 0 bis 2, insbesondere 0 oder 1, bedeuten,
R₃ und R₄ unabhängig voneinander jeweils gleich oder verschieden sind und C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder einen ankondensierten cycloaliphatischen oder heterocyclischen Ring bedeuten, inbesondere Halogen, NO₂, -NH₂, -NH-Acyl oder -NH-Alkyl bedeuten.

6. Verbindungen gemäß Anspruch 1, die der Formel (IIIb) entsprechen

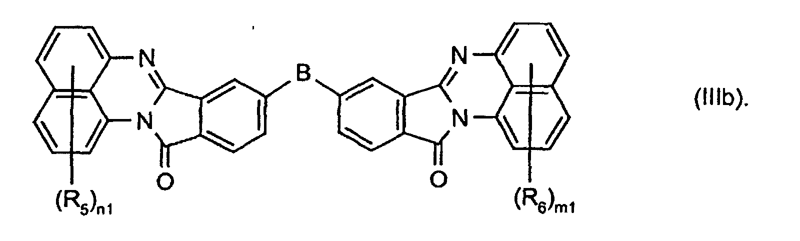

7. Verbindungen gemäß Anspruch 1, die der Formel (IV) oder deren tautomeren Formen

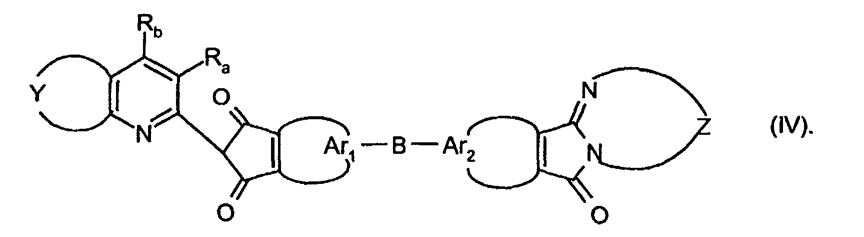

8. Verbindungen gemäß Anspruch 7, die der Formel (IVa) oder deren tautomeren Formen entsprechen 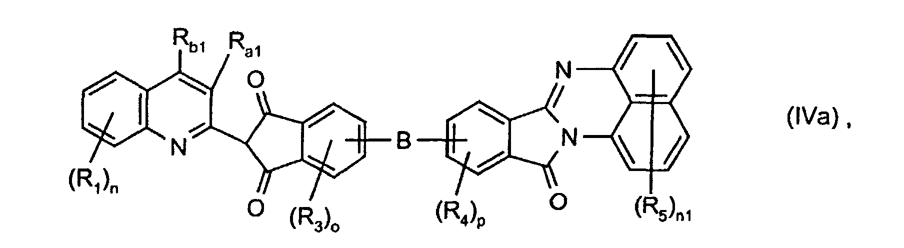 worin
Rₐ₁ und Rₐ₂ unabhängig voneinander H oder OH bedeuten, und
R_{b1} und R_{b2} unabhängig voneinander H oder Halogen, insbesondere F, Br oder Cl bedeuten,
n und n₁ unabhängig voneinander für eine Zahl von 0 bis 4 stehen,
R₁ Halogen, insbesondere Cl und Br, -COOH, -COOR, wobei R für C₁-C₁₀-Alkyl, insbesondere Methyl und Ethyl, C₆-C₁₀-Aryl oder C₅-C₈-Cycloalkyl steht oder C₁-C₆-Alkyl, insbesondere Methyl bedeuten,
o und p unabhängig eine Zahl von 0 bis 2, insbesondere 0 oder 1 bedeuten,
R₃ und R₄ unabhängig voneinander jeweils gleich oder verschieden sind, C₁-C₆-Alkyl, insbesondere Methyl, Ethyl, n-Propyl, iso-Propyl, n-, sek- und tert.-Butyl, Halogen, insbesondere Cl und Br, Alkyl- und Arylcarbonyl, Alkyl- und Arylsulfonyl, Nitro, Aryl, insbesondere gegebenenfalls substituiertes Phenyl, Aryloxysulfonyl, insbesondere -SO₂OC₆H₅, Hydroxy, C₁-C₆-Alkoxy, wie Methoxy oder Benzyloxy, Aryloxy, wie Phenoxy, gegebenenfalls durch Alkyl oder Acyl substituiertes Amino wie NH₂, NHCOCH₃ und -N(C₂H₅)₂, gegebenenfalls durch Alkyl oder Aryl substituiertes Aminosulfonyl wie SO₂N(CH₃)₂ und SO₂NHCH₃ oder einen ankondensierten cycloaliphatischen oder heterocyclischen Ring bedeuten, und
R₅ C₁-C₆-Alkyl, Halogen, Nitro, Aryl, Aryloxysulfonyl, Hydroxy, C₁-C₆-Alkoxy, Aryloxy, gegebenenfalls durch Alkyl oder Acyl substituiertes Amino, gegebenenfalls durch Alkyl oder Aryl substituiertes Aminosulfonyl oder einen ankondensierten cycloaliphatischen oder heterocyclischen Ring bedeuten, insbesondere für Halogen und C₁-C₆-Alkyl steht.

9. Verbindungen gemäß Anspruch 8, die der Formel (IVb) oder deren tautomeren Formen entsprechen

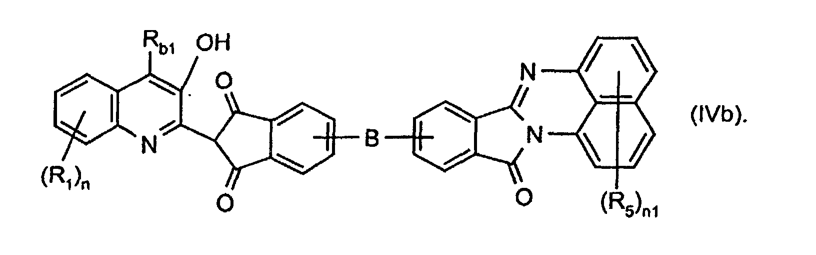

10. Verbindungen gemäß Anspruch 1, **gekennzeichnet, dass** sie der Formeln 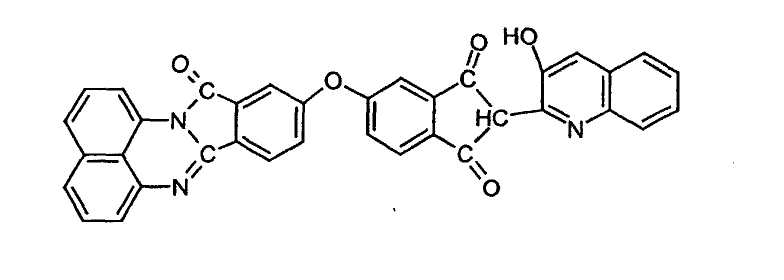 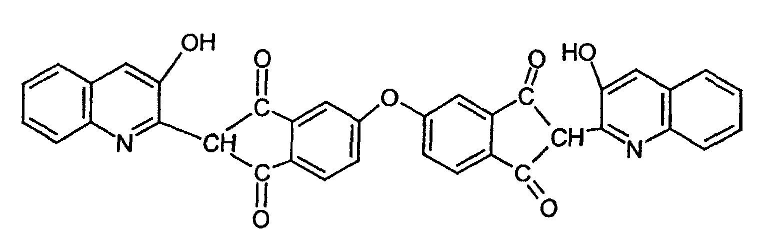 oder 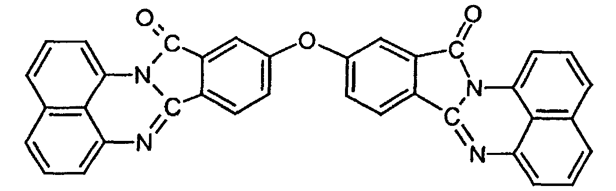 entsprechen.

11. Verfahren zur Herstellung der erfindungsgemäßen Verbindungen der Formel (I) gemäß Anspruch 1, das **dadurch gekennzeichnet ist, dass** man Tetracarbonsäuren oder deren Anhydride der Formel (V) 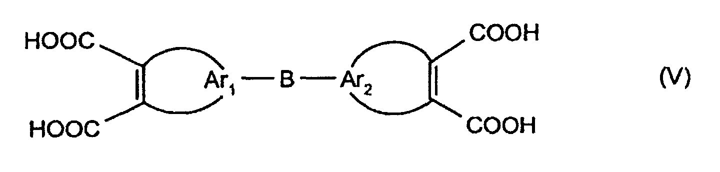 mit einer oder mehreren Verbindungen der Formeln (VI) und/oder (VII) 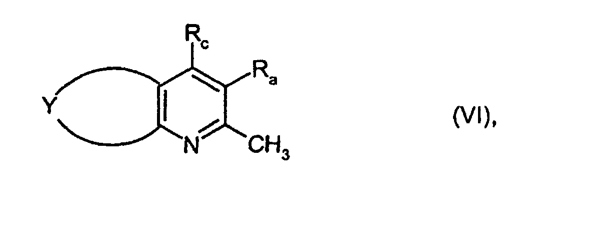 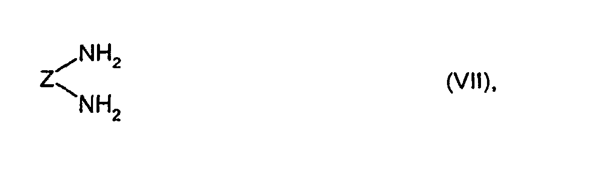 worin
R_{c} H, COOH oder Halogen, insbesondere F, Br und Cl bedeuten, insbesondere für H oder COOH steht und
Ar₁, Ar₂ B, Y, Z und Rₐ die in Anspruch 1 angegebene Bedeutung besitzen,
kondensiert, wobei die Summe der Verbindungen der Formeln (VI) und (VII) zwei Mol-Äquivalenten, bezogen auf die Tetracarbonsäure (V), entspricht.

12. Verwendung einer Verbindung gemäß Anspruch 1 zum Massefärben von Kunststoffen.

13. Kunststoffe, gefärbt mit wenigstens einer Verbindung gemäß Anspruch 1.

## Claims

1. Compounds of the general formula (I) or tautomeric forms thereof 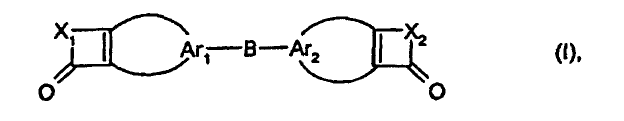 wherein
Ar₁ and Ar₂ independently of one another denote radicals to complete unsubstituted carbocyclic aromatic rings or carbocyclic aromatic rings substituted by C₁-C₆-alkyl, halogen alkylcarbonyl, arylcarbonyl, alkylsulphonyl, arylsulphonyl, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring,
B denotes a radical of the formula -O-,
the ends of which are in each case bonded to an aromatic C atom of the two radicals Ar₁ and Ar₂,
and
X₁ and X₂ independently of one another represent a radical of the formulae chosen from the group consisting of 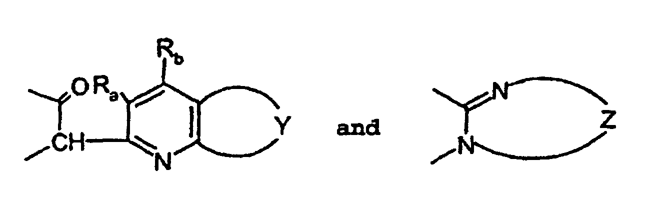 with the proviso that
X₁ and X₂ are not both the radical of the formula 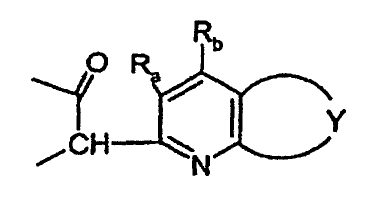
these being in each case located in the ring such that the 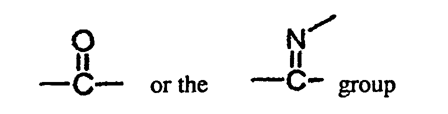 is adjacent to the C-C double bond,
wherein
Y forms the radical of an optionally substituted benzene or naphthalene ring, possible substituents being halogen, -COOH, -COOR, wherein R represents C₁-C₁₀-alkyl, C₆-C₁₀-aryl or C₅-C₈-cycloalkyl, and C₁-C₆-alkyl,
Z denotes optionally substituted ortho-phenylene, ortho-naphthylene, peri-(1,8)-naphthylene or arylene comprising more than two benzene rings fused to one another, the aryl radicals which contain more than two benzene rings fused to one another being bridged in the ortho-position or corresponding to a peri-position in naphthalene, possible substituents being C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cyloaliphatic or heterocyclic ring,
Rₐ denotes H or OH and
R_{b} denotes H or halogen, in particular F, Br and Cl.

2. Compounds according to Claim 1, **characterized in that** Ar₁ and Ar₂ independently of one another denote a radical for completion of an optionally substituted benzene or naphthalene ring, in particular an optionally substituted benzene ring.

3. Compounds according to Claim 1, which correspond to the formula (III) or tautomeric forms thereof 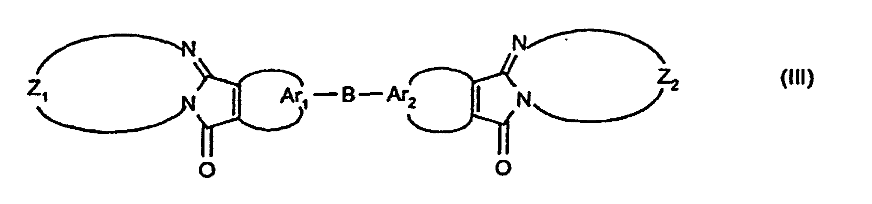 wherein
Z₁ and Z₂ independently of one another denote optionally substituted orthophenylene, ortho-naphthylene, peri-(1,8)-naphthylene or arylene comprising more than two benzene rings fused to one another, wherein the aryl radicals which contain more than two benzene rings fused to one another are bridged in the ortho-position or corresponding to a peri-position in naphthalene.

4. Compounds according to Claim 3, wherein the radicals Z₁ and Z₂ independently of one another correspond to an optionally substituted peri-(1,8)-naphthylene.

5. Compounds according to Claim 1, which correspond to the formula (IIIa) 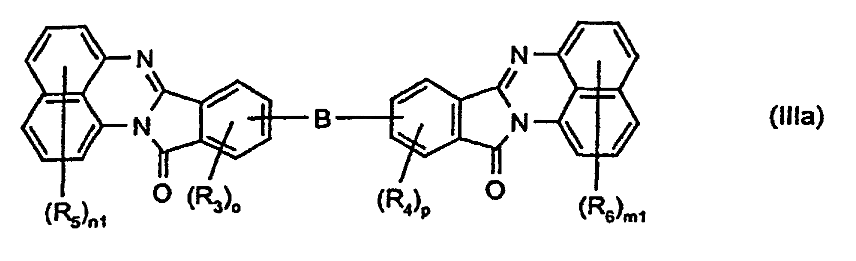 wherein
n₁ and m₁ independently of one another represent a number from 0 to 4,
R₅ and R₆ independently of one another are in each case identical or different and denote C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring, in particular represent halogen and C₁-C₆-alkyl,
o and p independently of one another denote a number from 0 to 2, in particular 0 or 1, and
R₃ and R₄ independently of one another are in each case identical or different and denote C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring, in particular halogen, NO₂, -NH₂, -NH-acyl or -NH-alkyl.

6. Compounds according to Claim 1, which correspond to the formula (IIIb)

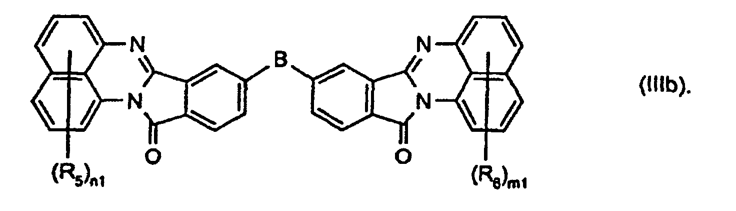

7. Compounds according to Claim 1, which correspond to the formula (IV) or tautomeric forms thereof

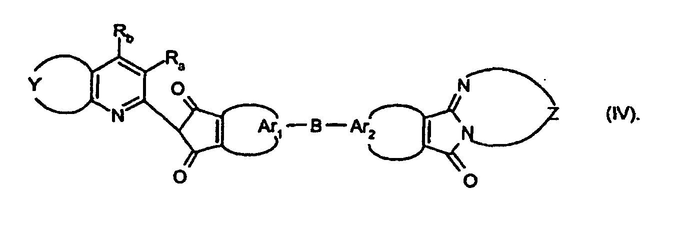

8. Compounds according to Claim 7, which correspond to the formula (IVa) or tautomeric forms thereof 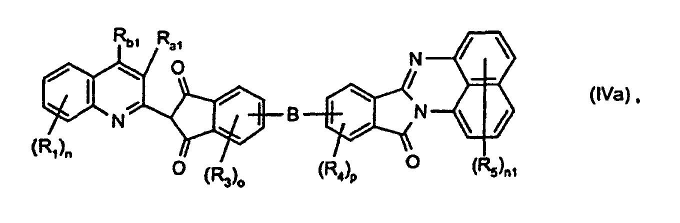 wherein
Rₐ₁ and Rₐ₂ independently of one another denote H or OH and
R_{b1} and R_{b2} independently of one another denote H or halogen, in particular F, Br or Cl,
n and n₁ independently of one another represent a number from 0 to 4,
R₁ denotes halogen, in particular Cl and Br, -COOH, -COOR wherein R represents C₁-C₁₀-alkyl, in particular methyl and ethyl, C₆-C₁₀-aryl or C₅-C₈-cycloalkyl, or denotes C₁-C₆-alkyl, in particular methyl,
o and p independently denote a number from 0 to 2, in particular 0 or 1,
R₃ and R₄ independently of one another are in each case identical or different and denote C₁-C₆-alkyl, in particular methyl, ethyl, n-propyl, isopropyl and n-, sec- and tert-butyl, halogen, in particular Cl and Br, alkyl- and arylcarbonyl, alkyl- and arylsulphonyl, nitro, aryl, in particular optionally substituted phenyl, aryloxysulphonyl, in particular -SO₂OC₆H₅, hydroxyl, C₁-C₆-alkoxy, such as methoxy or benzyloxy, aryloxy, such as phenoxy, amino which is optionally substituted by alkyl or acyl, such as NH₂, NHCOCH₃ and -N(C₂H₅)₂, aminosulphonyl which is optionally substituted by alkyl or aryl, such as SO₂N(CH₃)₂ and SO₂NHCH₃, or a fused-on cycloaliphatic or heterocyclic ring, and
R₅ denotes C₁-C₆-alkyl, halogen, nitro, aryl, aryloxysulphonyl, hydroxyl, C₁-C₆-alkoxy, aryloxy, amino which is optionally substituted by alkyl or acyl, aminosulphonyl which is optionally substituted by alkyl or aryl, or a fused-on cycloaliphatic or heterocyclic ring, in particular represents halogen and C₁-C₆-alkyl.

9. Compounds according to Claim 8, which correspond to the formula (IVb) or tautomeric forms thereof

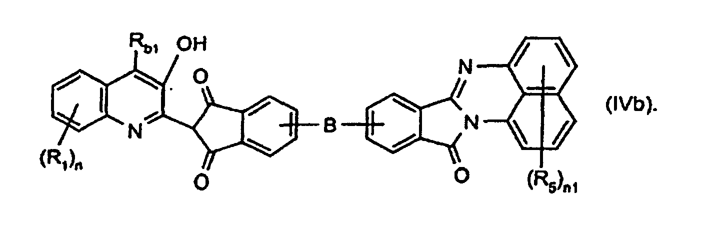

10. Compounds according to Claim 1, **characterized in that** they correspond to the formulae

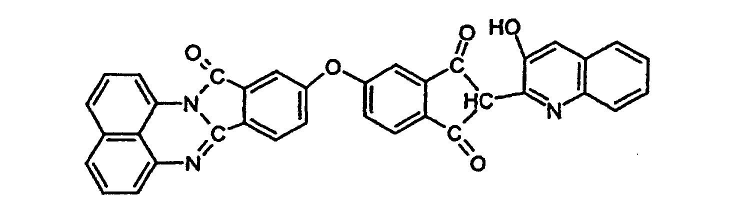

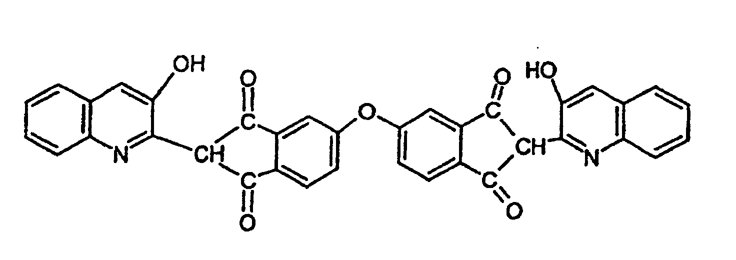

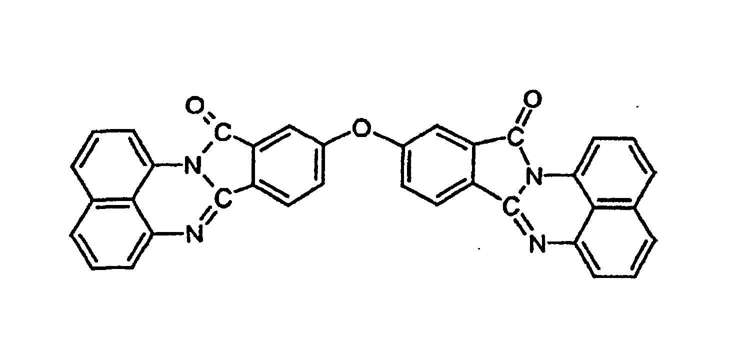

11. Process for the preparation of the compounds of the formula (I) according to the invention, according to Claim 1, which is **characterized in that** tetracarboxylic acids or anhydrides thereof, of the formula (V) 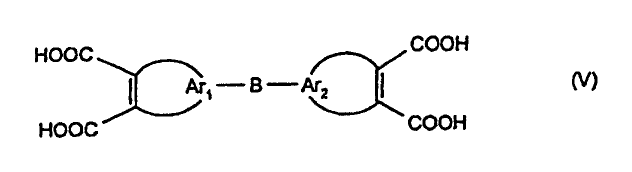 are subjected to a condensation reaction with one or more compounds of the formulae (VI) and/or (VII) 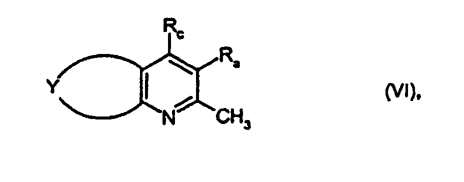 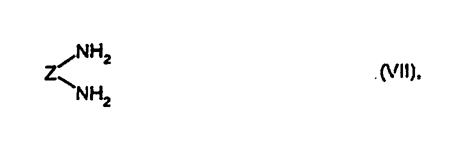 wherein
R_{c} denotes H, COOH or halogen, in particular F, Br and Cl, in particular represents H or COOH, and
Ar₁, Ar₂, B, Y, Z and Rₐ have the meaning given in Claim 1,
the sum of the compounds of the formulae (VI) and (VII) corresponding to two molar equivalents, based on the tetracarboxylic acid (V).

12. Use of a compound according to Claim 1 for mass coloration of plastics.

13. Plastics coloured with at least one compound according to Claim 1.

## Revendications

1. Composés de formule générale (I) ou leurs formes tautomères 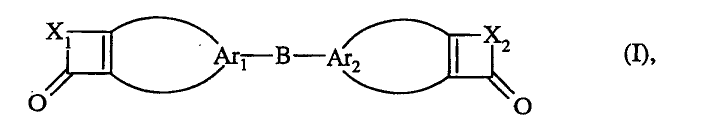 dans laquelle
Ar₁ et Ar₂ représentent chacun, indépendamment l'un de l'autre, des radicaux complétant des groupes aromatiques homogènes substitués ou non, les substituants éventuels consistant en groupes alkyle en C₁-C₆, halogènes, groupes alkyl- et aryl-carbonyle, alkyl- et aryl-sulfonyle, nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou en un noyau cycloaliphatique ou hétérocyclique condensé,
B représente un radical de formule
-O-,
dont les extrémités sont reliées chacune à un atome de carbone aromatique des deux radicaux Ar₁ et Ar₂,
et
X₁ et X₂ représentent chacun, indépendamment l'un de l'autre, un groupe répondant à l'une des formules 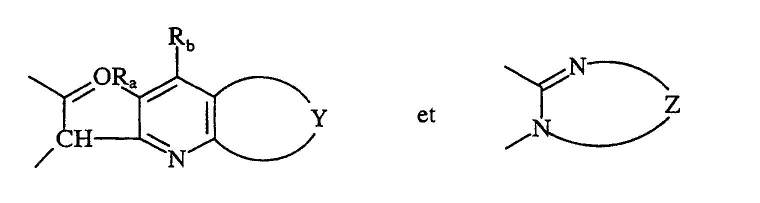
à condition que X₁ et X₂ ne représentent pas ensemble le radical de formule 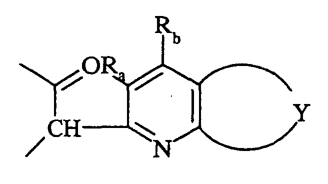 disposé dans le cycle en sorte que le groupe 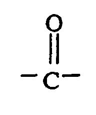 ou respectivement le groupe 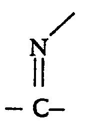 soit voisin de la double liaison C-C,
Y représente le radical d'un cycle benzénique ou naphtalénique éventuellement substitué, les substituants éventuels consistant en halogènes, en groupes -COOH, -COOR, dans lesquels R représente un groupe alkyle en C₁-C₁₀, aryle en C₆-C₁₀ ou cycloalkyle en C₅-C₈, et alkyle en C₁-C₆,
Z représente un groupe ortho-phénylène, ortho-naphtylène, péri-(1,8-naphtylène ou arylène à plus de deux cycles benzéniques condensés entre eux, éventuellement substitué, les groupes aryle à plus de deux cycles benzéniques condensés entre eux étant pontés en ortho ou, en correspondance, en position péri du naphtalène, les substituants éventuels étant des groupes alkyle en C₁-C₆, des halogènes, des groupes nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou un noyau cycloaliphatique ou hétérocyclique condensé,
Rₐ représente H ou OH et
R_{b} représente H ou un halogène, plus spécialement F, Br et Cl.

2. Composés selon la revendication 1, **caractérisés en ce que** Ar₁ et Ar₂ représentent chacun, indépendamment l'un de l'autre, un radical complétant un cycle benzénique ou naphtalénique éventuellement substitué, plus spécialement un cycle benzénique éventuellement substitué.

3. Composés selon la revendication 1, répondant à la formule (III), ou leurs formes tautomères 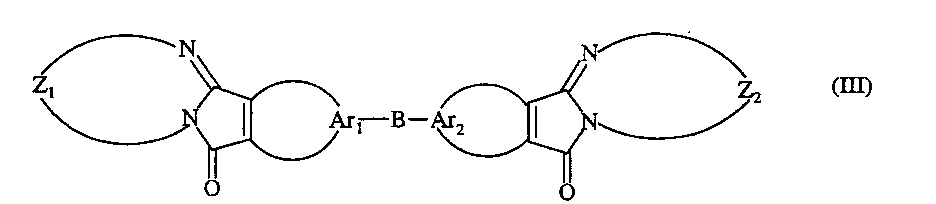 dans laquelle
Z₁ et Z₂ représentent chacun, indépendamment l'un de l'autre, un groupe ortho-phénylène, ortho-naphtylène, péri-(1,8)-naphtylène ou arylène à plus de deux cycles benzéniques condensés entre eux, éventuellement substitué, les groupes aryle à plus de deux cycles benzéniques condensés entre eux étant pontés en ortho ou en correspondance dans une position péri dans le naphtalène.

4. Composés selon la revendication 3, pour lesquels Z₁ et Z₂ représentent chacun, indépendamment l'un de l'autre, un groupe péri-(1,8)-naphtylène éventuellement substitué.

5. Composés selon la revendication 1 répondant à la formule (IIIa) 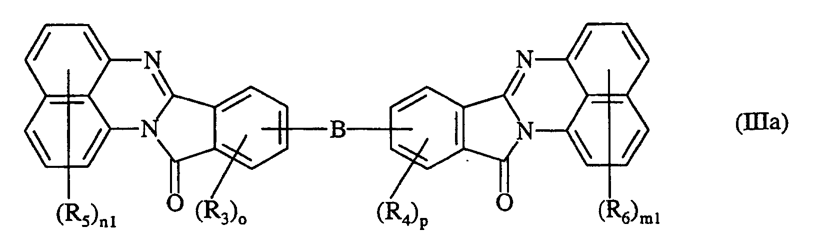 dans laquelle
n₁ et m₁ représentent chacun indépendamment l'un de l'autre, un nombre allant de 0 à 4,
R₅ et R₆, ayant des significations identiques ou différentes, représentent chacun, indépendamment l'un de l'autre, un groupe alkyle en C₁-C₆, un halogène, un groupe nitro, aryle, aryloxysulfonyle, hydroxy, alcoxy en C₁-C₆, aryloxy, amino éventuellement substitué par des groupes alkyle ou acyle, aminosulfonyle éventuellement substitué par les groupes alkyle ou aryle, ou un noyau cycloaliphatique ou hétérocyclique condensé, plus spécialement un halogène ou un groupe alkyle en C₁-C₆,
o et p représentent chacun, indépendamment l'un de l'autre, un nombre allant de 0 à 2 et plus spécialement 0 ou 1,
R₃ et R₄, ayant des significations identiques ou différentes, représentent chacun, un groupe alkyle en C₁-C₆, un halogène, un groupe nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou un noyau cycloaliphatique ou hétérocyclique condensé, plus spécialement un halogène, un groupe NO₂, -NH₂, -NH-acyle ou -NH-alkyle.

6. Composés selon la revendication 1, répondant à la formule (IIIb)

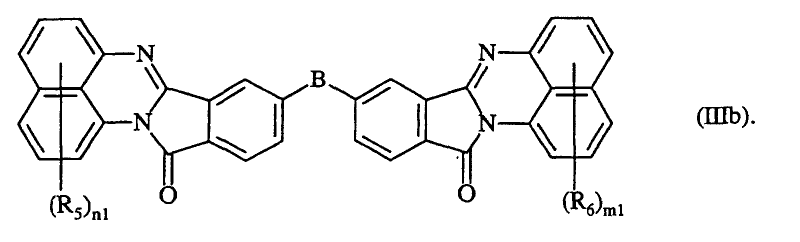

7. Composés selon la revendication 1, répondant à la formule (IV), ou leurs formes tautomères

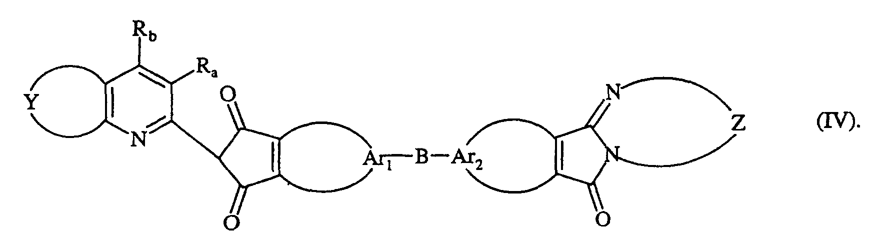

8. Composés selon la revendication 7, répondant à la formule (IVa), ou leurs formes tautomères 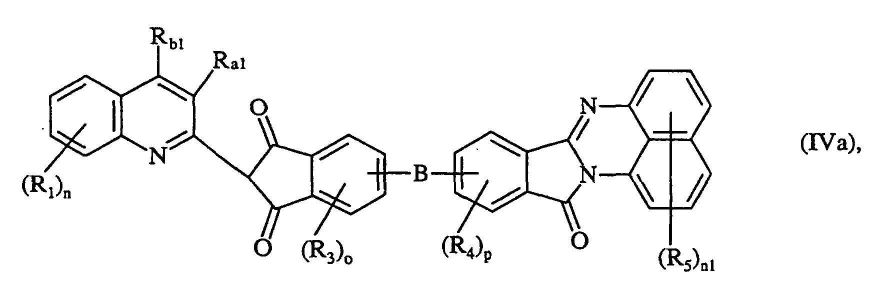 dans laquelle
Rₐ₁ et Rₐ₂ représentent chacun, indépendamment l'un de l'autre, H ou OH, et
R_{b1} et R_{b2} représentent chacun, indépendamment l'un de l'autre, H ou un halogène, plus spécialement F, Br ou Cl, et
n et n₁ représentent chacun, indépendamment l'un de l'autre, un nombre allant de 0 à 4,
R₁ représente un halogène, plus spécialement Cl ou Br, un groupe -COOH, -COOR dans lequel R représente un groupe alkyle en C₁-C₁₀, plus spécialement méthyle ou éthyle, aryle en C₆-C₁₀ ou cycloalkyle en C₅-C₈, ou alkyle en C₁-C₆, plus spécialement méthyle,
o et p représentent chacun, indépendamment l'un de l'autre, un nombre allant de 0 à 2, plus spécialement 0 ou 1,
R₃ et R₄, ayant des significations identiques ou différentes, représentent chacun, indépendamment l'un de l'autre, un groupe alkyle en C₁-C₆, plus spécialement méthyle, éthyle, n-propyle, isopropyle, n-, sec- ou tert-butyle, un halogène, plus spécialement Cl ou Br, un groupe alkyl- ou aryl-carbonyle, alkyl- ou aryl-sulfonyle, nitro, aryle, plus spécialement phényle éventuellement substitué, aryloxysulfonyle, plus spécialement -SO₂OC₆H₅, hydroxy, alcoxy en C₁-C₆ tel que méthoxy ou benzyloxy, aryloxy tel que phénoxy, amino lui-même éventuellement substitué par des groupes alkyle ou acyle, par exemple NH₂, NHCOCH₃ ou -N(C₂H₅)₂, aminosulfonyle lui-même éventuellement substitué par des groupes alkyle ou aryle, par exemple SO₂N(CH₃)₂ et SO₂NHCH₃, ou un noyau cycloaliphatique ou hétérocyclique condensé et
R₅ représente un groupe alkyle en C₁-C₆, un halogène, un groupe nitro, aryle, aryloxysulfonyle, hydroxy, alcoxy en C₁-C₆, aryloxy, amino lui-même éventuellement substitué par des groupes alkyle ou acyle, aminosulfonyle lui-même éventuellement substitué par des groupes alkyle ou aryle, ou un noyau cycloaliphatique ou hétérocyclique condensé, plus spécialement un halogène ou un groupe alkyle en C₁-C₆.

9. Composés selon la revendication 8, répondant à la formule (IVb), ou leurs formes tautomères

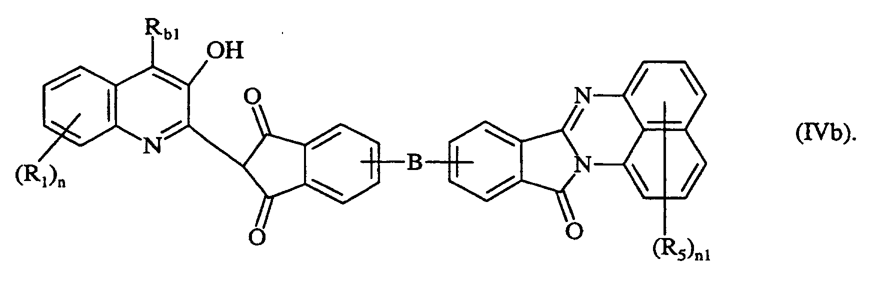

10. Composés selon la revendication 1, **caractérisés en ce qu'**ils répondent aux formules : 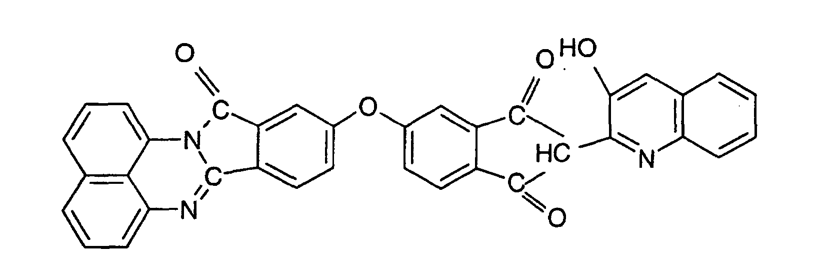 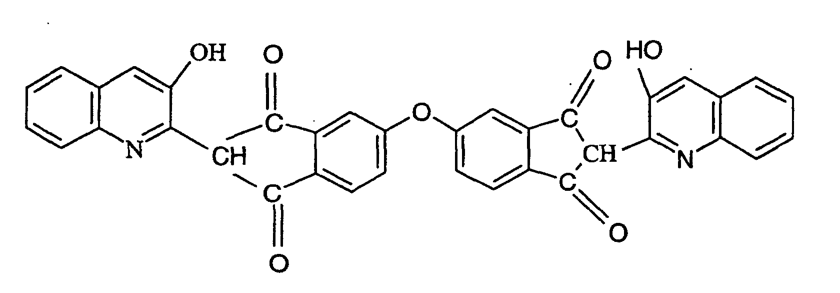 ou

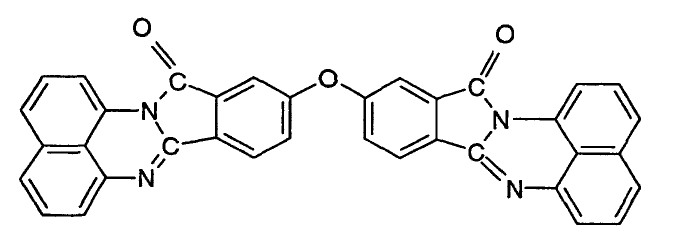

11. Procédé de préparation des composés de formule (I) selon la revendication 1 selon l'invention, **caractérisé en ce que** l'on condense des acides tétracarboxyliques ou leurs anhydrides de formule (V) 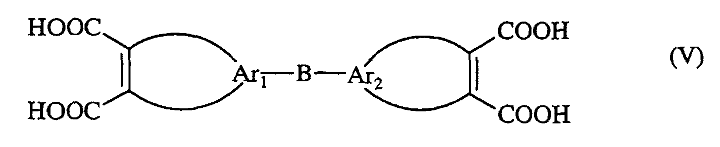 avec un ou plusieurs composés de formules (VI) et/ou (VII) 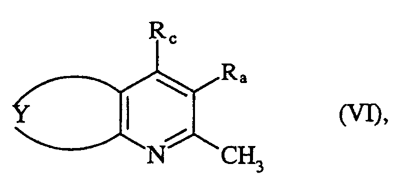 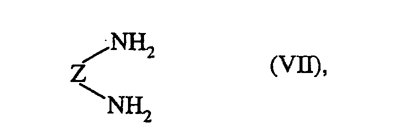 dans lesquelles
R_{c} représente H, COOH ou un halogène, plus spécialement F, Br ou Cl, en particulier H ou COOH et
Ar₁, Ar₂, B, Y, Z et Ra ont les significations indiquées dans la revendication 1,
la somme des composés de formule (VI) et (VII) représentant deux équivalents molaires par rapport à l'acide tétracarboxylique (V).

12. Utilisation d'un composé selon la revendication 1 pour la coloration de résines synthétiques dans la masse.

13. Résines synthétiques colorées par au moins un composé selon la revendication 1.
